# EUROPEAN PATENT APPLICATION

(11) **EP 1 502 772 A1**
(43) Date of publication of application: **02.02.2005**
(21) Application number: 03717666.6
(22) Date of filing: 21.04.2003
(51) Int. Cl.: B60C 17/00, B60C 9/02, B60C 15/00, B60C 15/06, B29D 30/10

(54) **RUN FLAT TIRE AND METHOD OF MANUFACTURING THE TIRE**

(30) Priority: 19.04.2002 JP 2002117037
(71) Applicant: Bridgestone Corporation, Tokyo 104-8340 (JP)
(72) Inventor: OGAWA, Yuuichirou, BRIDGESTONE CORPORATION, Kodaira-shi, Tokyo 187-8531 (JP)
(74) Representative: Whalley, Kevin
(86) International application number: PCT/JP2003/005056
(87) International publication number: WO 2003/089258

(57) **Abstract**

The present invention is to provide a runflat tire which can effectively inhibit both of pulling out of carcass cords and coming off of beads during running in the runflat state.

A runflat tire according to the present invention comprises a carcass 4 toroidally extending over a pair of beads 5, a pair of sidewall portions 6 and a tread portion 7, and a reinforcing rubber layer 8 which has a crescent sectional shape and is arranged at the interior surface side of the carcass 4. The carcass 4 comprises at least one cord layers 3 including radial cord portions 15, which are radially-arrayed at a circumferential pitch P, and circumferential cord portions 16, which circumferentially connect respective inner ends of adjacent radial cord portion 15.

## Description

### TECHNICAL FIELD

The present invention relates to a runflat tire capable of running for a certain distance even in a state where the inner pressure thereof has inordinately decreased or the tire has been punctured. In particular, the present invention is intended to remarkably improve a uniformity of the tire as well as to effectively inhibit both of pulling out of carcass cords and coming off of beads during running in the runflat state.

### BACKGROUND ART

As a so-called runflat tire which is capable of running for a certain distance even when it gets an inordinate decrease in its inner pressure or it gets a puncture, there are two types of tires, i.e. a so-called core type runflat tire and a so-called side reinforced runflat tire. The former contains a supporting body in a tire/rim assembly, and the latter has a reinforcing rubber layer which consists of a relatively soft rubber and is arranged on the inner surface of the carcass at least in the sidewall portion.

A dimensional deviation of the tire may greatly affect on its uniformity especially for the side reinforced-type runflat tire, due to a material stiffness of its reinforcing rubber layer. Therefore, when such a runflat tire is to be built, it is necessary to satisfy a restrict standard in which a dimensional accuracy of the carcass as well as a thickness and a shape of the reinforcing rubber layer underneath the carcass are set higher than those of the ordinal tires.

A so-called core process (three dimensional process) is useful as a method of building a tire satisfying such a restrict standard. In this process, a green tire is formed in a shape similar to the product tire by attaching cords and rubber on the outer surface of a rigid core, and then the green tire along with the rigid core are vulcanized to yield the product tire without accompanying a large radial expansion caused due to a shaping step or the like. The tire built by the core process has a remarkably superior uniformity as compared with a tire built by a conventional process which includes a shaping step.

International Publication WO 00/73093, for example, discloses a tire built by a core process. However, as shown in FIG. 9, since each of cord layers 102, 103 of a carcass 101 has such a configuration that a plurality of cords 104 are arranged between both bead portions at a given pitch, this tire has a problem in which a force anchoring the carcass by means of the beads is insufficient and thus the cords104 of such a carcass 101 are easily pulled out in the tire's radial direction. Where the arrangement pitch between the carcass cords 104 is narrowed and thereby increasing the carcass stiffness, it is useful that the adjacent cord layers are so arranged that cords thereof are shifted with each other at a given circumferential pitch. A tire having the configuration described in the above-mentioned International Publication WO 00/73093 inevitably needs to arrange a circumferential cord 105 extending in the circumferential direction between the cord layers 102 and 103, which complicates the operation of attaching the cords.

In JP 11-115420 A, which was filed by the present applicant and was already laid-open, the present applicant disclosed a pneumatic tire that can facilitate the operation of attaching carcass cords and can effectively inhibit the carcass cords from pulling out by adopting a configuration in which split beads sandwich a carcass layer formed by arranging two layers of cord assemblies on the outer surface of the core while maintaining the overlap region and shifting the cord assemblies with each other at a given distance L in the circumferential direction.

In such a pneumatic tire, however, a distance between the radially innermost end of the split bead and the tire bead base is not particularly defined. When the distance becomes larger, the thickness of the rubber placed between the inner end of the split bead in the tire's radial direction and the tire bead base also becomes larger. Accordingly, such a pneumatic tire is not suitably applied to a runflat tire since the lower part of the bead portion largely deforms and thus the bead portion cannot exert a sufficient engagement force against the wheel rim when the inner pressure of the tire decreases.

US Patent No. 3,815,652 describes a tire which has a carcass layer built by using a continuous cord and arranging the cord while remaining the overlap region and shifting in the circumferential direction. This tire, however, cannot effectively prevent the carcass cords from pulling out, since a bead is arranged on a single side of the carcass layer and the tire does not employ a configuration in which the carcass layer is not sandwiched from the both sides.

US Patent No. 5,660,656 describes a tire which has such a configuration that split beads sandwich a carcass layer built by using a continuous cord and arranging the cord while shifting in the circumferential direction. This tire, however, has a problem in which a overlapping portion of the cords constituting the carcass layer present between the beads so that the tire cannot effectively prevent the carcass cords from pulling out.

### DISCLOSURE OF THE INVENTION

The object of the present invention is to provide a runflat tire which can remarkably improve its uniformity as well as can effectively inhibit both of pulling out of carcass cords and coming off of beads during running in the runflat state by using a continuous cord and appropriately arranging the end portion of at least one cord layers constituting the carcass.

To achieve the above-mentioned object, a runflat tire according to the present invention comprises a carcass toroidally extending over a pair of bead portions in which a bead core is embedded, a pair of sidewall portions and a tread portion, and a reinforcing rubber layer which has a crescent sectional shape and is arranged at the interior surface side of the carcass at least in the sidewall portions, and is characterized in that the carcass comprises at least one cord layers including a continuous cord and having a plurality of radial cord portions radially-arrayed between the bead portions at a given circumferential pitch P and a plurality of circumferential cord portions circumferentially connecting respective inner ends of adjacent radial cord portions in the bead portion.

It is also preferred that the carcass comprises n (n is greater than or equal to two) layers of the cord layers; the adjacent cord layers are so arranged that their radial cord portions are circumferentially spaced with each other by a distance L obtained when the circumferential pitch P is divided by the number n; the circumferential cord portions of the different cord layers are substantially contacted with each other to form an overlap portion in the bead portions; the bead consists of a pair of split bead cores, the split bead cores locating on both sides of the carcass to sandwich the carcass; the circumferential cord portions locate below a lower end of the split bead cores as viewed from the tire's radial direction; and an inner end in the tire's radial direction of the split bead core locating outside as viewed from the tire's width direction is so placed that a vertical distance from a tire bead base or its extension is not more than 5 mm, particularly not more than 3mm.

It is further preferred that the split bead core constituting the bead is formed by helically winding a bead wire.

It is further preferred that the number n of the cord layers constituting the carcass is 3, and that the overlap portion has a triple contact portion at which all of the circumferential cord portions of the different cord layers are substantially contacted with each other.

If it is more necessary to prevent the carcass cords from pulling out, it is preferred that the bead consist of a pair of split bead cores, the split bead cores locating on both sides of the carcass to sandwich the carcass; and the carcass comprises at least one turn-up cord layers folded around the split bead core locating outside as viewed form the tire's width direction from the inner side to the outer side in the tire's width direction; and wherein a folded end of the turn-up cord layer substantially consists of a plurality of the circumferential cord portions.

Meanwhile, if the bead consist not of a split bead but of an ordinal bead, it is preferred that a stiffener rubber tapered outwardly in the tire's radial direction is further arranged outside the bead in the tire's radial direction; the carcass comprises at least one turn-up cord layers folded around the bead and the stiffener rubber from the inner side to the outer side in the tire's width direction; and wherein a folded end of the turn-up cord layer substantially consists of a plurality of the circumferential cord portions.

It is further preferred that, as viewed in a section in the tire's width direction under a condition where the tire is assembled to its standard rim to form a tire/wheel assembly and then a small inner pressure of 15% of the maximum inner pressure is applied to the tire with no load applied thereto, the folded end of the turn-up cord layer is laid, in the tire's radial direction, inside of a line segment PA which connects an arc center point P of the flange contour and an intersection A of the inner surface of the tire and a line extending outwardly in the tire's radial direction from the center point P at an angle of 60 degrees in relation to a line parallel to the rim radial line.

It is also preferred, as viewed in a section in the tire's width direction under a condition where the tire is assembled to its standard rim to form a tire/wheel assembly and then a maximum load is applied to the tire with no inner pressure applied thereto, the folded end of the turn-up cord layer is laid, in the tire's radial direction, outside of a line segment QB which connects an outermost point Q of the rim guard in the tire's width direction and an intersection B of the inner surface of the tire and a line extending outwardly in the tire's radial direction from the outermost point Q at an angle of 60 degrees in relation to a line parallel to the rim radial line.

It is preferred, as viewed from the tire's width direction, the sectional area of the stiffener rubber is in a range between 20- 25% of the sectional area of the reinforcing rubber.

As used herein, the term "standard rim" refers to a standard rim specified in an industrial specification, standard or the like such as JATMA, TRA and ETRTO which are effective in the area where the tire is manufactured, sold or used. The term "maximum pressure" refers to a maximum pressure (an inner pressure corresponding to the maximum load capability) specified in the above-mentioned industrial specification or standard.

It is also preferred that a plurality of the circumferential cord portions constituting the folded end of the turn-up cord layer are so arranged that their positions in the tire's radial direction differ with each other.

It is further preferred that an overlap portion at which the circumferential cord portions in the different cord layers substantially contact with each other is formed in the bead portions.

A method of building a tire including a carcass having the above-mentioned turn-up cord layer, for example, comprises the steps of attaching, as needed, an inner liner, a reinforcing rubber, a carcass ply rubber and the like on a toroidal shaping core of a shaping body which has the shaping core, a bladder stored inside the periphery of the shaping core, and a detachable folding core enclosing the bladder when it is stored; forming, thereafter, a carcass by attaching a continuous cord while radially displacing it back and forth between the both bead portions at a given circumferential pitch P; and then folding ends of the carcass around the beads by removing the folding core and expanding the bladder stored therein.

### BRIEF DESCRIPTION OF THE DRAWINGS

FIG. 1 is a partially exploded perspective view of a representative embodiment of a runflat tire according to the present invention;
FIG. 2 is a sectional view of the bead portion 5 of the tire shown in FIG. 1 in the tire's width direction;
FIGS. 3(a)- (c) are schematic views for illustrating a procedure of arranging the carcass cord 2 of the tire shown in FIG. 1;
FIGS. 4(a)- (c) are schematic views for illustrating another procedure of arranging the carcass cord 2 of the tire shown in FIG. 1;
FIGS. 5(a)- (c) are schematic views for illustrating yet another procedure of arranging the carcass cord 2 of the tire shown in FIG. 1;
FIG. 6(a) is a sectional view showing a state of the circumferential cord portion 16 in the overlap region K2 of the tire shown in FIG. 1 in the tire's width direction;
FIG. 6(b) is a sectional view showing another state of the circumferential cord portion 16 in the overlap region K2 of the tire shown in FIG. 1 in the tire's width direction;
FIG. 6(c) is a sectional view showing yet another state of the circumferential cord portion 16 in the overlap region K2 of the tire shown in FIG. 1 in the tire's width direction;
FIG. 7 is a schematic view for illustrating an example of a procedure of arranging the carcass cord 2 of a tire which has three cord layers 3;
FIG. 8 is a sectional view showing a state of the circumferential cord portion 16 in the overlap region K of the tire shown in FIG. 7 in the tire's width direction;

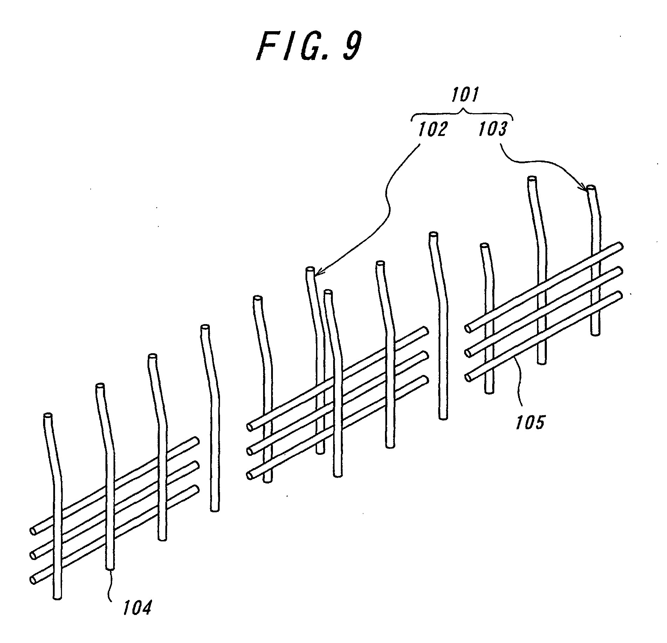

FIG. 9 is a schematic view showing an arrangement of the cords in a tire manufactured according to the conventional core process;

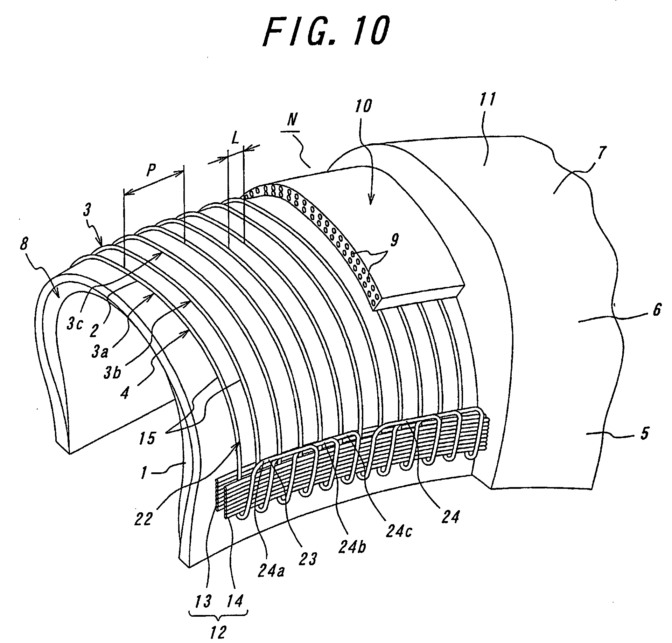

FIG. 10 is a partially exploded perspective view of another embodiment of a runflat tire according to the present invention;
FIG. 11 is a partially exploded perspective view of another embodiment of a runflat tire according to the present invention;
FIG. 12 is a half sectional view of another embodiment of a runflat tire according to the present invention in the tire's width direction;

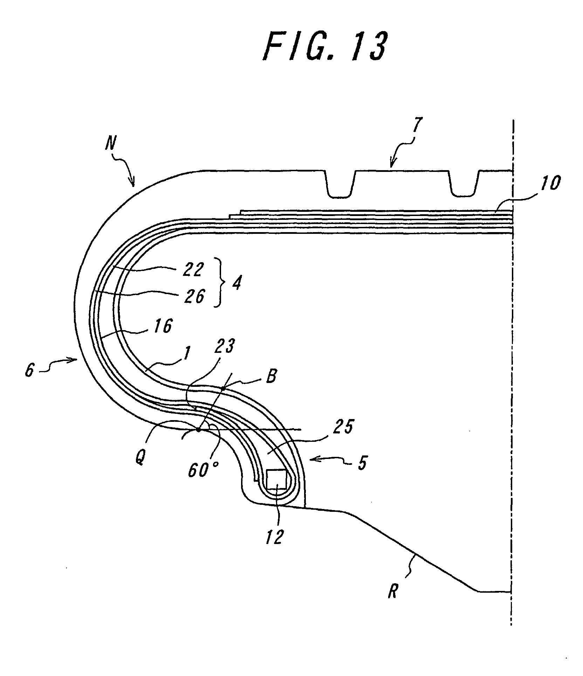

FIG. 13 is a half sectional view of the tire shown in FIG. 11 in the tire's width direction when the inner pressure is zero and the steady state load is applied;
FIG. 14 is a half sectional view of another embodiment of a tire according to the present invention in the tire's width direction; and
FIG. 15 is a sectional view of Comparative Example showing a configuration of its bead portion.

### BEST MODE FOR CARRYING OUT THE INVENTION

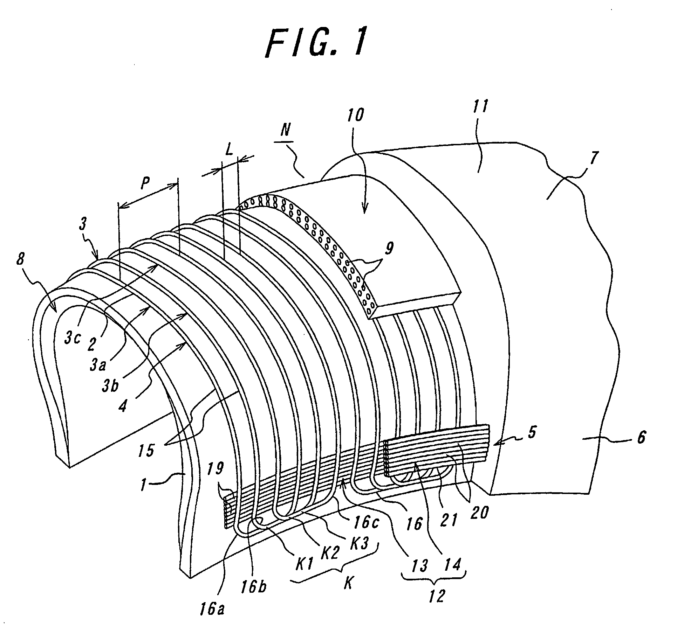

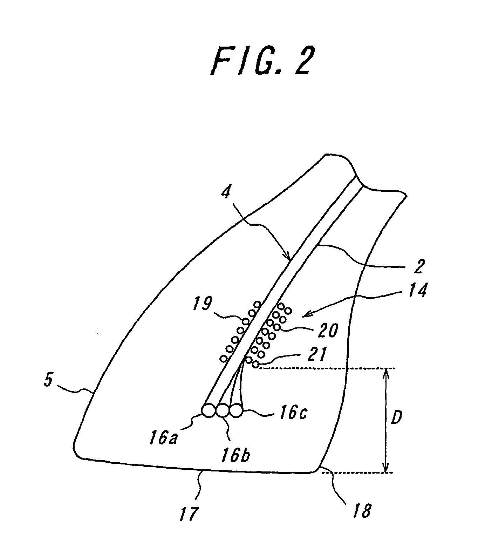

Hereinafter, an embodiment of the present invention will be described with reference to the drawings. FIG. 1 is a partially exploded perspective view of a representative embodiment of a runflat tire according to the present invention and FIG. 2 is a sectional view of the bead portion 5 of the runflat tire shown in FIG. 1.

The runflat tire (hereinafter referred to as "tire") N shown in FIGS. 1 and 2 has a carcass 4 which is arranged outside a carcass liner 1 and which consists of a layer 3 of a cord 2. The carcass 4 toroidally extends over a pair of bead portions 5, a pair of sidewall portions 6 and a tread portion 7. A reinforcing rubber layer 8 having a crescent sectional shape is provided on the inner surface side of the sidewall portion 6 in relation to the carcass 4. On the periphery of the crown portion of the carcass 4, there is provided a belt 10 built by laminating, in the tire's radial direction, a plurality of cord layers in which a plurality of cords 9 are aligned in parallel and are coated with rubber. A tread rubber layer 11 is arranged on the belt 10.

A constitutional feature of the present invention is to optimize the carcass cords and the configuration of the bead, and more specifically the feature is that the carcass comprises at least one cord layer including a continuous cord and having a plurality of radial cord portions radially-arrayed between the bead portions at a given circumferential pitch P and a plurality of circumferential cord portions circumferentially connecting respective inner ends of adjacent radial cord portions in the bead portion. As such a configuration is adopted to the tire that a plurality of circumferential cord portions circumferentially connect the respective inner ends of the adjacent radial cord portions in the bead portion, the stiffness near the bead portion has been improved and thus the beads are prevented from coming off especially during running in the runflat state. In addition, as the ends of the carcass cords are connected by the circumferential cord portions, which increases a force of anchoring the carcass by means of the beads, the carcass cords are effectively prevented from pulling out even when a force of pulling out the carcass cord is activated.

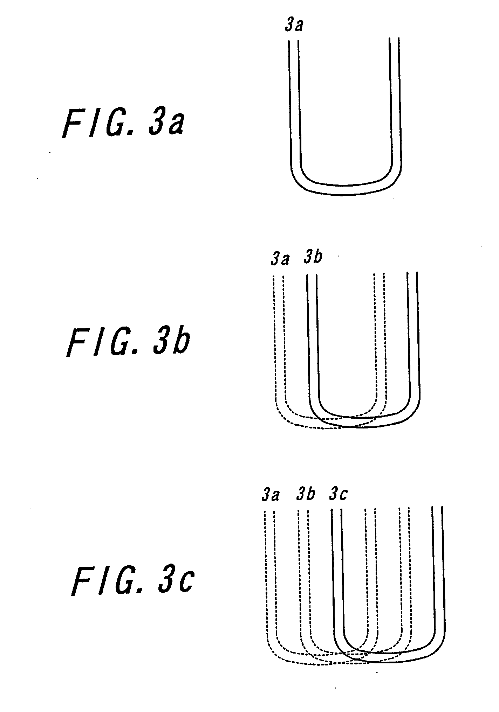

In a preferred embodiment of the present invention, the carcass 4 includes n (n is greater than or equal to two, and three in FIG. 3) layers of the cord layers 3a, 3b and 3c which are composed of a continuous cord 2 and has a plurality of radial cord portions 15 and circumferential portions 16 connecting the respective inner ends of the adjacent radial cord portions 15 in the bead portion 5. Sets of adjacent cord layers 3a and 3b, 3b and 3c are so arranged that their radial cord portions 15 are circumferentially spaced with each other by a distance L obtained when the circumferential pitch P is divided by the number n (three in FIG. 1). The circumferential cord portions 16a, 16b and 16c of the different cord layers 3a, 3b and 3c, respectively, are substantially contacted with each other to form an overlap portion K in the bead portions 5. The bead 12 consists of a pair of split bead cores 13 and 14 which locate on both sides of the carcass 4 to sandwich the carcass 4. The circumferential cord portions 16a, 16b and 16c locate below the lower end of the split bead cores 13 and 14 as viewed from the tire's radial direction. The inner end 21 in the tire's radial direction of the split bead core 14 locating outside as viewed from the tire's width direction is so placed that a vertical distance from a tire bead base 17 or its extension is not more than 5 mm.

That is, when the three cord layers 3a, 3b and 3c are arranged to have the circumferential distance L therebetween, the circumferential cord portions 16a, 16b and 16c of these cord layers 3a, 3b and 3c partly overlap and contact with each other in the tire's width direction to form overlap portions K1, K2 and K3 in the bead 5. In these overlap portions, the circumferential cord portions 16a, 16b and 16c contact and hold one another. Even when a force acts on the radial cord portions 15 outwardly in the tire's radial direction and thus the circumferential cord portion 16a continuing thereto is pulled outwardly, the circumferential cord portion 16a is prevented from moving due to the adjacent circumferential cord portion 16b, thereby inhibiting the carcass cord 2 from pulling out. Further, the adjacent circumferential cord portions 16a, 16b and 16c contact and restrain with each other in the overlap portions K1, K2 and K3, as shown in FIG. 2, so that they are integrated to give a diameter of the circumscribed circle larger than that of a single carcass cord 2, while the pair of split bead cores 13 and 14 are arranged to sandwich the carcass 4 at near the border of the radial carcass cord portion 15 and the circumferential cord portion 16 so that the space therebetween is slightly larger than the diameter of the carcass cord 2. The overlap portion K is difficult to pass through the space between the pair of the split bead cores 13 and 14 since the circumferential cord portions 16 are placed inside the inner ends 21 of the bead as viewed from the tire's radial direction. Moreover, since the radial cord portion 15 and the circumferential portion 16 are continuously formed, the circumferential cord portion 16 continuing to the radial cord portion 15 is restrained by the bead 12 even when a force acts on the carcass 4 outwardly in the tire's radial direction and the radial cord portion 15 is pulled out, resulting an effective prevention of pulling down the carcass cords 2.

Further, the radial cord portion 15 and the circumferential cord portion 16 connect with each other, so that a device for attaching a carcass cord, for example, described in JP 2000-52448 A, which is also filed by the present applicant, can be used to continuously form the carcass 4. This may improve the uniformity and the productivity of the tire.

In addition, according to the conventional process, a smaller distance between the radial cords yields a smaller feed of the tire's constitutional members per an arrangement of the radial cord, resulting poor accuracy and productivity, while a larger distance between the radial cords yields a smaller strength of the carcass so that a cord with a larger diameter is needed to prevent this. In contrast, according to the present invention, even if the distance L between the radial cord portions 15 is small, the arrangement pitch P of the radial cord portions 15 is large enough to be able to facilitate a manufacturing of the carcass with closely arranged cords.

Moreover, as the vertical distance between the radially innermost end of the split bead core 14 which locates outside as viewed from the tire's width direction and the tire bead base 17 or its extension is set to 5 mm or less, the stiffness near the bead heal portion 18 becomes higher. As a result, even when the inner pressure decreases, the lower part of the bead portion 5 is less deformed and thus the bead portion 5 exerts a sufficient engagement force against the rim of the wheel (not shown) so that the bead is effectively prevented from coming off.

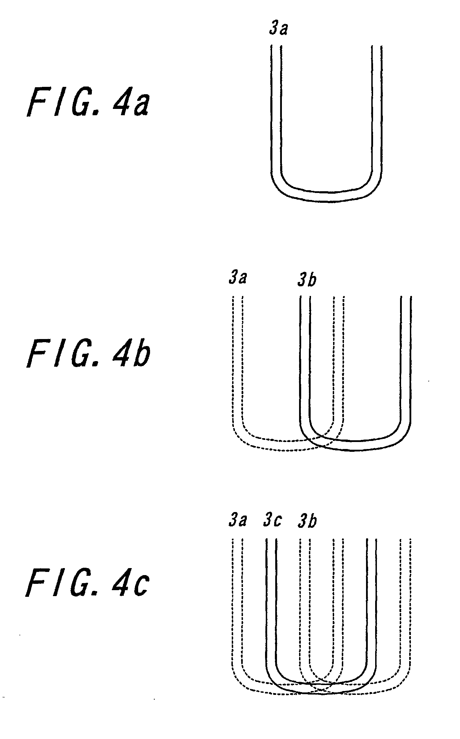

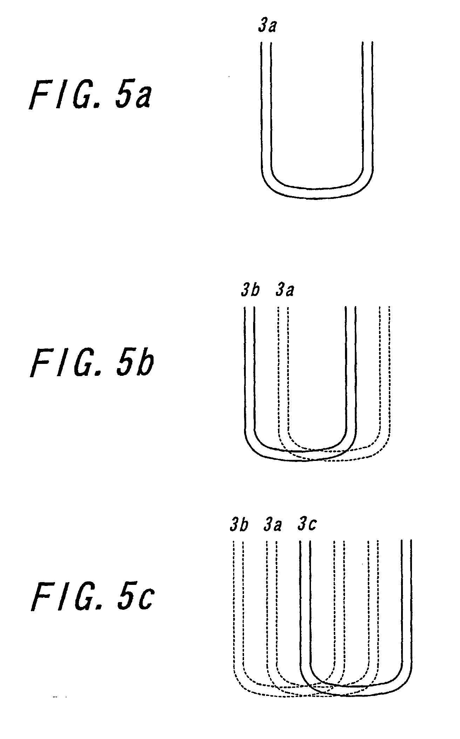

Although FIG. 1 shows an embodiment in which the cord layers 3a, 3b and 3c are serially arranged with circumferentially shifted by the distance L, as shown in FIG. 3(a), the order in arranging the cord layer 3a, 3b and 3c is not particularly limited as far as the radial cord portions 15 can be evenly spaced after the carcass layer 4 is built. For example, the cord layer 3c may be arranged between the cord layers 3a and 3b, as shown in FIG. 4, or the cord layer 3a may be arranged between the cord layers 3b and 3c as shown in FIG. 5.

Furthermore, the pair of the split bead cores 13 and 14 constituting the bead 12 is preferably formed by helically winding bead wires 19 and 20, respectively. As the bead wires 19 and 20 are helically winded to arrange them in piles substantially parallel to the circumferential cord portion 16, the overlap portion K is difficult to pass through the space between the pair of the split beads 13 and 14 so that the effect of restricting the carcass 4 by means of the bead is enhanced. In addition, as the split bead core 14 especially locating outwardly in the tire's width direction is formed by aligning a plurality of arrays of bead wires 20 in the tire's width direction, the stiffness near the bead heal portion 18 is further enhanced to effectively prevent the pulling out of the carcass cord 2 and the coming off of the bead.

The vertical distance D between the radially innermost end 21 of the split bead core 14 locating outwardly as viewed from the tire's width direction is preferably not more than 3 mm. The closer the bead wire 20 is placed to the bead heal portion 18, the larger the stiffness near the bead heal portion 18. This reduces the deformation of the shape near the bead heal portion 18 and ensures a sufficient engagement force of the bead portion 5 of the tire against the rim of the wheel (not shown) even when the inner pressure decreases.

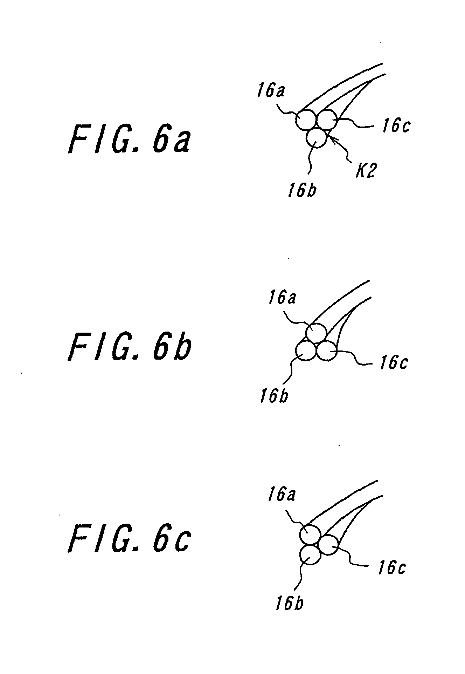

In this regard, the overlap portion K may be so formed that only the circumferential cord portion 16b substantially contacts with the other two cord portions 16a and 16c, as shown in FIG. 2, and more preferably the overlap portion K has a triple contact portion at which all of the circumferential cord portions 16a, 16b and 16c are substantially contacted with each other. That is, in the second overlap portion K2 shown in FIG. 1, if each of the circumferential cord portions 16a, 16b and 16c is placed at a vertex of a equilateral triangle, as shown in FIG. 6(c), positional relationships of the circumferential cord portions 16a, 16b and 16c are stabilized and mutual restriction forces therebetween are further increased by the contact. This makes the anchoring of the overlap portion K by means of the bead 12 stronger when a force is applied outwardly to the carcass 4 in the tire's radial direction.

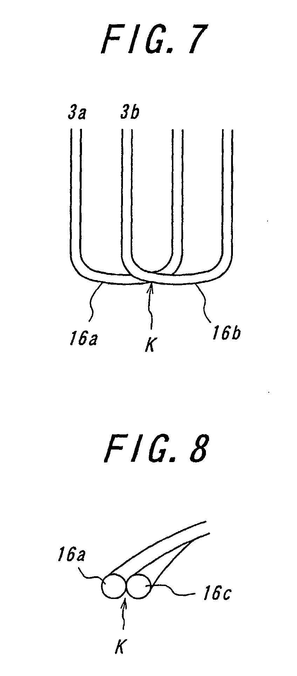

Although FIGS. 1-6 show embodiments in which the cord layer 3 consist of three layers, the cord layer 3 may consist of two layers in another embodiment. In that case, the overlap portion K has an arrangement shown in FIGS. 7 and 8.

FIG. 6(a) shows an embodiment in which the circumferential cord portions 16a, 16b and 16c constituting the overlap portion K are placed at vertexes of an equilateral triangle and one of the vertexes is directed inwardly in the tire's radial direction. The circumferential cord portions 16a, 16b and 16c, however, may be placed on the equilateral triangles shown in FIGS. 6(b) and 6(c) which are rotationally symmetry with the equilateral triangle shown in FIG. 6(a). The circumferential cord portions 16a, 16b and 16c may be placed at any vortexes of an equilateral triangle.

The runflat tire having the above-mentioned configuration and according to the present invention has superior uniformity and can effectively inhibit both of pulling out of carcass cords and coming off of beads during running in the runflat state.

However, under a more severe condition where the tire is used in the runflat state with a higher load being applied, it may be necessary to further inhibit both of pulling out of carcass cords and coming off of beads during running in the runflat state.

In this case, it is preferred that the bead 12 consists of a pair of split bead cores 13 and 14 which locate on both sides of the carcass 4 to sandwich the carcass 4, the carcass 4 comprises at least one turn-up cord layers 22 folded around the split bead core14 located outside as viewed form the tire's width direction from the inner side to the outer side in the tire's width direction, and a folded end 23 of the turn-up cord layer 22 substantially consists of a plurality of the circumferential cord portions 24a, 24b and 24c.

Such a tire has the bead 12 consisted of the split beads 13 and 14, so that, as mentioned in the above, the overlap portion is difficult to pass through the space between the split beads 13 and 14. In addition, the tire has the carcass 4 provided with the turn-up layer 22 which is formed in a turn-up configuration, so that the carcass cord 2 is further difficult to be pulled out even when a force is applied to the carcass 4 outwardly in the tire's radial direction and the radial cord portions 15 are pulled outwardly. Moreover, the tire has the circumferential cord portions which circumferentially connect the respective inner ends of the adjacent radial cord portions, so that the bonding area between the carcass cord 2 and the rubber is increased and the carcass cord 2 is formed in a key-like shape (a configuration capable of hooking the rubber). Such a configuration makes the carcass cord 2 difficult to be pulled out, thereby exerting a remarkable effect especially in a state where a large force is applied, such as in a severe runflat running state.

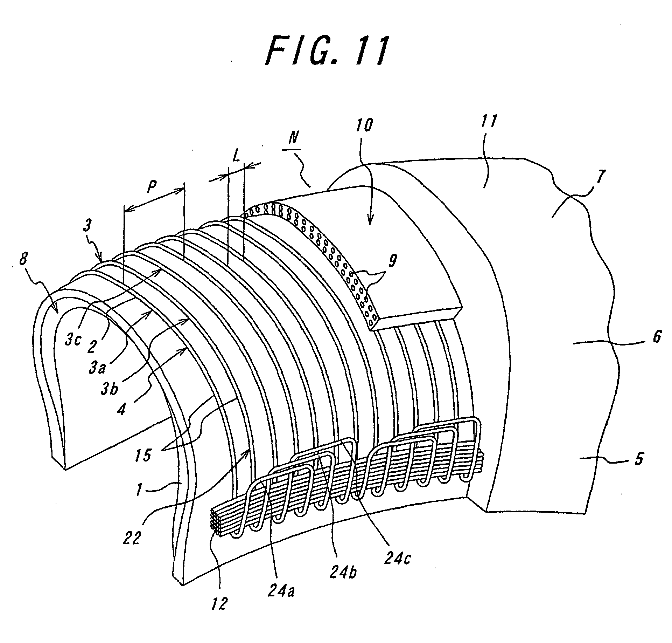

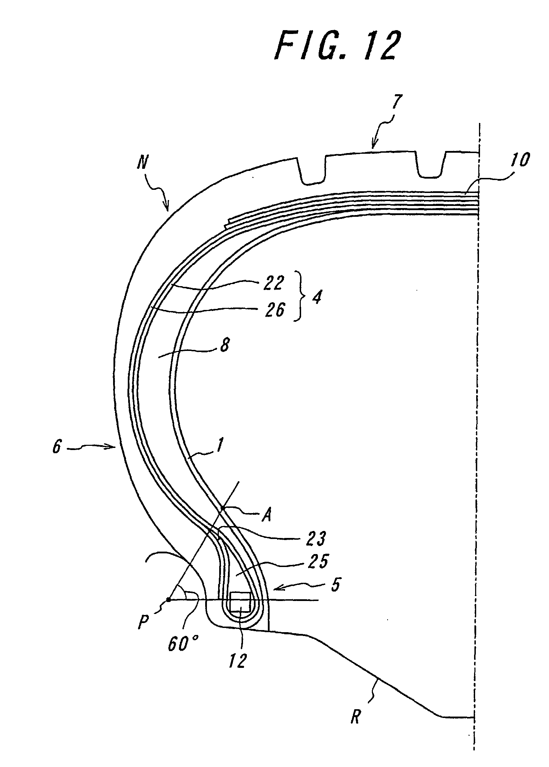

The tire shown in FIG. 12 is another embodiment of the present invention which has a turn-up configuration. In this tire, a stiffener rubber 25 tapered outwardly in the tire's radial direction is further arranged outside the bead 12 as viewed from the tire's radial direction. The carcass 4 comprises at least one turn-up cord layers 22 folded around the bead 12 and the stiffener rubber 25 from the inner side to the outer side in the tire's width direction. The folded end 23 of the turn-up cord layer 22 substantially consists of a plurality of the circumferential cord portions 24a- 24c (FIG. 11). Such a configuration may also exert the same effect as the above-mentioned turn-up configuration. In FIG. 12, although shown is an embodiment in which the carcass 4 has a so-called up-and-down configuration consisting of one turn-up cord layer 8 and one downward cord layer, the carcass 4 may have various configurations.

It is preferred that, as viewed in a section in the tire's width direction under a condition where the tire is assembled to its standard rim to form a tire wheel and then a small air pressure of 15% of the maximum inner pressure is applied to the tire (so-called a free-standing state) with no load applied thereto (FIG. 12), the folded end of the turn-up cord layer is laid in the tire's radial direction inside of a line segment PA which connects an arc center point P of said flange contour and an intersection A of the inner surface of the tire and a line extending outwardly in the tire's radial direction from the center point P at an angle of 60 degrees in relation to a line parallel to the rim radial line. In other words, the turn-up cord layer preferably has a so-called low turn-up configuration in which the height of the folded portion of the turn-up cord layer is smaller than the height of the rim flange. Such a configuration may avoid a large force caused by contacting with the rim especially in a normal running state. As a result, a separation can be effectively prevented at the folded ends of the carcass. In addition, the turn-up card layer having the low turn-up configuration is advantageous in the point where it may avoid a large force caused by contacting with the rim even in a runflat running state.

In order to effectively prevent a separation at the folded ends of the carcass in a runflat running state, it is also preferred that, as viewed in a section in the tire's width direction under a condition where the tire is assembled to its standard rim to form a tire wheel and then a maximum load is applied to the tire with no air pressure applied thereto, the folded end of the turn-up cord layer is laid in the tire's radial direction outside of a line segment QB which connects an outermost point Q of the rim guard in the tire's width direction and an intersection B of the inner surface of the tire and a line extending outwardly in the tire's radial direction from the outermost point Q at an angle of 60 degrees in relation to a line parallel to the rim radial line.

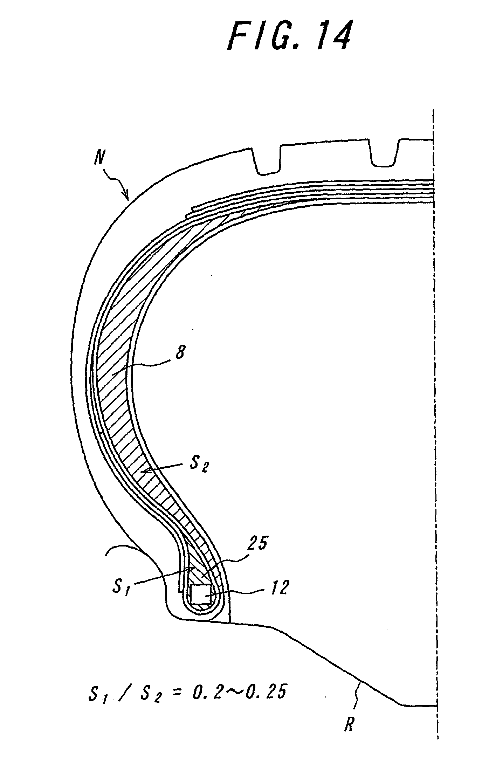

If the tire necessarily has a stable and sufficient runflat performance, as viewed from the tire's width direction, the sectional area S1 of the stiffener rubber 25 is preferably in a range between 20- 25% of the sectional area S2 of the reinforcing rubber 8, as shown as a hatched portion in FIG. 14. This is because the stiffness tends to be insufficient when the sectional area S1 of the stiffener rubber 25 is less than the sectional area S2 of the reinforcing rubber 8, while problems such as a heat generation, a weight increase and a deterioration in the riding quality may arise when the sectional area S1 is more than the sectional area S2.

Furthermore, in order to disperse the stress acting on the folded ends and to effectively prevent an occurrence and growth of a separation, the circumferential cord portions 24a- 24c constituting the folded end 23 of the turn-up cord layer 22 are preferably arranged in such a manner that their positions in the tire's radial direction differ with each other, as shown in FIG. 11.

In the turn-up cord layer 22 constituting the carcass, the circumferential cord portions of the adjacent cord layers may be arranged without overlapping with each other, as shown in FIG. 15(b), since it can be effectively prevent the carcass cords from pulling out. If the carcass cord should be more strictly prevented from pulling out, an overlap portion at which the circumferential cord portions 24a- 24c in the different cord layers 3a- 3c substantially contact with each other is preferably formed at the position of each of the bead portions 5.

As an example of a method of building the above-mentioned runflat tire having the carcass consisted of the turn-up cord layer, a method may be mentioned by way of example, which comprising the steps of attaching, as needed, an inner liner, a reinforcing rubber, a carcass ply rubber and the like on a toroidal shaping core of a shaping body which has the shaping core, a bladder stored inside the periphery of the shaping core, and a detachable folding core enclosing the bladder when it is stored; forming, thereafter, a carcass by attaching a continuous cord while radially displacing it back and forth between the both bead portions at a given circumferential pitch P; and then folding ends of the carcass around the beads by removing the folding core and expanding the bladder stored therein.

Although illustrative embodiments of the present invention have been described above, variations and modifications may be made without departing from the scope of the invention as defined by the appended claims.

### EXAMPLES

Pneumatic tires according to the present invention were experimentally manufactured and their performances in durability and bead-securing forces were evaluated. The details will be described below.

Examples 1- 14 were runflat tires for passenger vehicles and their tire sizes were 215/65 R15. Each of Examples 1- 4 provided with a carcass, which did not have a tum-up cord layer but had overlap portions, and beads, which consist of split bead cores formed by helically winding a bead wire. Each of Examples 5- 13 provided with a carcass, which had a turn-up cord layer but did not have overlap portions, and beads, which consist of a single bead core formed by helically winding a bead wire. Example 15 provided with a carcass, which had a turn-up cord layer and overlap portions, and beads, which consist of a single bead core formed by helically winding a bead wire. Examples 1- 14 had parameters shown in Table 1 or 2. In Table 1, "Distance between the bead inner end and the bead base" and "Distance between the circumferential cord portion and the bead base" are indicated as vertical distances the inner end of the bead or the circumferential cord portion in the tire's radial direction and the tire bead base or its extension. In Table 2, "Sectional area of stiffener rubber" is indicated as a percentage of the sectional area of the stiffener rubber to the sectional area of the reinforcing rubber layer. In Table 2, "Position of the folded end" means the position of the folded portion of the turn-up cord layer of the carcass, "BQ- PA" means that the folded portion locates between the line segments BQ and PA, and ">QB" means that the folded portion locates inside the line segment QB in the tire's radial direction.

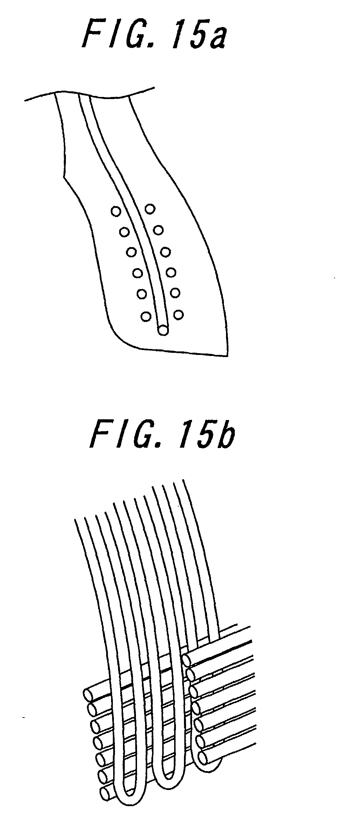

For the purpose of comparison, a tire having the conventional carcass configuration (Conventional Example) and a tire having the carcass configuration shown in FIGS. 15a and 15_{b} (Comparative Example), both of which had the same tire size as those of Examples 1- 14, were also experimentally manufactured.

The durability was evaluated in the following procedures. The above-mentioned test tires were equipped on standard rims specified by JATMA to form tire/wheel assemblies. Then, the bulb cores were removed to set their inner pressure at 0 kPa (relative pressure). These tires were pressed against a drum rotating at the surface velocity of 89 km/h with a loading force of 5.3 kN, and the distances until the tires were broken were measured. The durability was evaluated based on the measured distance. The evaluated results are shown in Tables 1 and 2.

The bead-securing force was evaluated in the following procedures. The above-mentioned test tires were equipped on standard rims specified by JATMA to form tire/wheel assemblies. Then, by means of a device for measuring the bead-securing force which is commercially available from Hofmann, the bead portion was expanded at some segments and an expansion force was measured when the segment was expanded to the specific value defined for the standard rim. The bead-securing force was evaluated based on the measured force. The evaluated results are shown in Tables 1 and 2.

In Tables 1 and 2, each performance was represented by an index provided the performance of the Conventional Example is set to 100. The larger index means the better performance.

**[Table 1]**

| | Conventional Example | Comparative Example | Example 1 | Example 2 | Example 3 | Example 4 |
|---|---|---|---|---|---|---|
| Pitch P | 1.5 | 1.5 | 3 | 4.5 | 6 | 4.5 |
| Number of carcasses n | 1 | 1 | 3 | 3 | 4 | 3 |
| L=P/n | 1.5 | 1.5 | 1.5 | 1.5 | 1.5 | 1.5 |
| Type of bead | Single | Split | Split | Split | Split | Split |
| Overlap portion | No | No | Yes | Yes | Yes | Yes |
| Distance between the bead inner end and the bead base | 5mm | 5mm | 5mm | 5mm | 3mm | 3mm |
| Distance between the circumferential cord portion and the bead base | 2.5mm | 2.5mm | 2.5mm | 2.5mm | 0.5mm | 0.5mm |
| Durability | 100 | 82 | 108 | 110 | 112 | 112 |
| Bead-securing force | 100 | 75 | 102 | 106 | 108 | 108 |

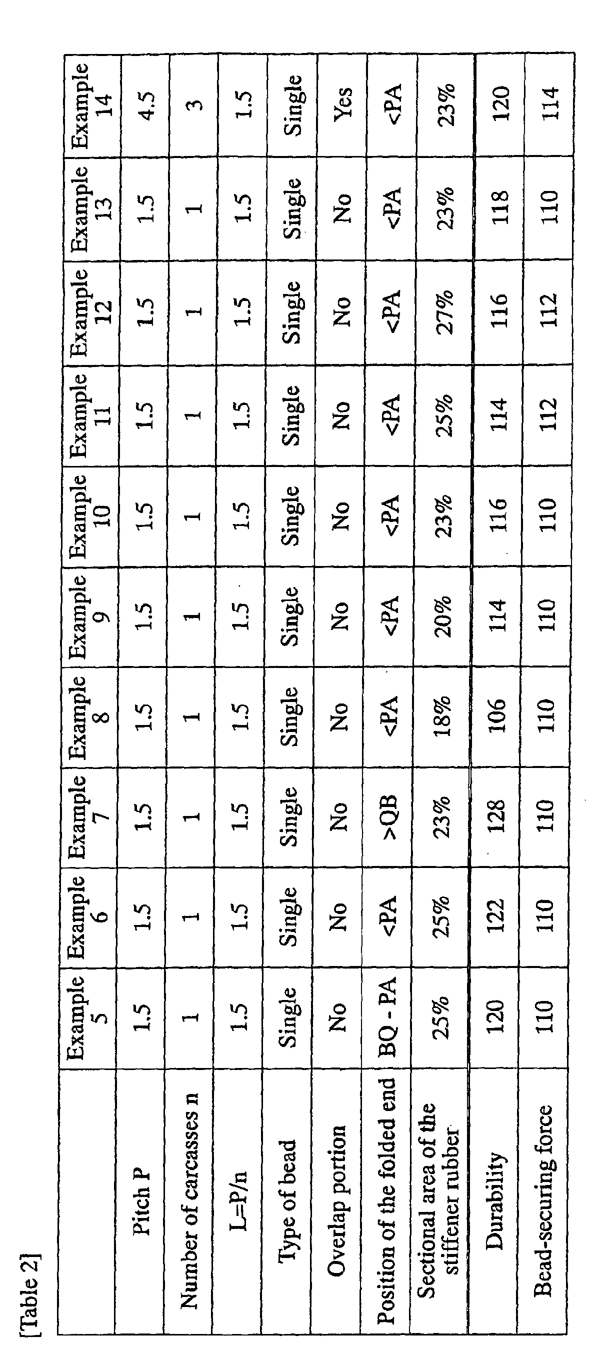

As seen from the results of Tables 1 and 2, it is clear that each of Examples 1- 14 has superior durability and bead-securing force as compared with Conventional Example and Comparative Example.

### INDUSTRIAL APPLICABILITY

According to the present invention, it is possible to provide a runflat tire which can effectively inhibit both of pulling out of carcass cords and coming off of beads during running in the runflat state.

## Claims

1. A runflat tire comprising a carcass toroidally extending over a pair of bead portions in which beads are embedded, a pair of sidewall portions and a tread portion, and a reinforcing rubber layer which has a crescent sectional shape and is arranged at the interior surface side of the carcass at least in the sidewall portions, **characterized in that**
said carcass comprises at least one cord layers including a continuous cord and having a plurality of radial cord portions radially-arrayed between the bead portions at a given circumferential pitch P and a plurality of circumferential cord portions circumferentially connecting respective inner ends of adjacent radial cord portions in the bead portion.

2. The runflat tire according to Claim 1, wherein said carcass comprises n (n is greater than or equal to two) layers of the cord layers;
the adjacent cord layers are so arranged that their radial cord portions are circumferentially spaced with each other by a distance L obtained when said circumferential pitch P is divided by the number n;
the circumferential cord portions of the different cord layers are substantially contacted with each other to form an overlap portion in the bead portions;
said bead consists of a pair of split bead cores, said split bead cores locating on both sides of the carcass to sandwich the carcass;
said circumferential cord portions locate below a lower end of the split bead cores as viewed from the tire's radial direction; and
an inner end in the tire's radial direction of the split bead core located outside as viewed from the tire's width direction is so placed that a vertical distance from a tire bead base or its extension is not more than 5 mm.

3. The runflat tire according to Claim 2, wherein said split bead core constituting the bead is formed by helically winding a bead wire.

4. The runflat tire according to Claim 2 or 3, wherein said vertical distance is not more than 3 mm.

5. The runflat tire according to Claim 2, 3 or 4, wherein said number n of the cord layers constituting the carcass is 3.

6. The runflat tire according to Claim 5, wherein said overlap portion has a triple contact portion at which all of the circumferential cord portions of the different cord layers are substantially contacted with each other.

7. The runflat tire according to Claim 1, wherein said bead consists of a pair of split bead cores, said split bead cores locating on both sides of the carcass to sandwich the carcass; and
said carcass comprises at least one turn-up cord layers folded around the split bead core locating outside in the tire's width direction from the inner side to the outer side in the tire's width direction; and wherein
a folded end of said turn-up cord layer substantially consists of a plurality of the circumferential cord portions.

8. The runflat tire according to Claim 1, wherein a stiffener rubber tapered outwardly in the tire's radial direction is further arranged outside the bead in the tire's radial direction;
said carcass comprises at least one turn-up cord layers folded around the bead and the stiffener rubber from the inner side to the outer side in the tire's width direction; and wherein
a folded end of said turn-up cord layer substantially consists of a plurality of the circumferential cord portions.

9. The runflat tire according to Claim 7 or 8, wherein, as viewed in a section in the tire's width direction under a condition where the tire is assembled to its standard rim to form a tire/wheel assembly and then a small inner pressure of 15% of the maximum inner pressure is applied to the tire with no load applied thereto, the folded end of the turn-up cord layer is laid, in the tire's radial direction, inside of a line segment PA which connects an arc center point P of said flange contour and an intersection A of the inner surface of the tire and a line extending outwardly in the tire's radial direction from the center point P at an angle of 60 degrees in relation to a line parallel to the rim radial line.

10. The runflat tire according to Claim 7, 8 or 9, wherein, as viewed in a section in the tire's width direction under a condition where the tire is assembled to its standard rim to form a tire/wheel assembly and then a maximum load is applied to the tire with no inner pressure applied thereto, the folded end of the turn-up cord layer is laid, in the tire's radial direction, outside of a line segment QB which connects an outermost point Q of said rim guard in the tire's width direction and an intersection B of the inner surface of the tire and a line extending outwardly in the tire's radial direction from the outermost point Q at an angle of 60 degrees in relation to a line parallel to the rim radial line.

11. The runflat tire according to any one of Claims 7- 10, wherein, as viewed from the tire's width direction, the sectional area of said stiffener rubber is in a range between 20- 25% of the sectional area of said reinforcing rubber.

12. The runflat tire according to any one of Claims 7- 11, wherein a plurality of said circumferential cord portions constituting said folded end of the turn-up cord layer are so arranged that their positions in the tire's radial direction differ with each other.

13. The runflat tire according to any one of Claims 7- 12, wherein an overlap portion at which the circumferential cord portions in the different cord layers substantially contact with each other is formed in the bead portion.

14. A method of building the tire according any one of Claims 7- 13, comprising the steps of
attaching, as needed, an inner liner, a reinforcing rubber, a carcass ply rubber and the like on a toroidal shaping core of a shaping body which has the shaping core, a bladder stored inside the periphery of the shaping core, and a detachable folding core enclosing the bladder when it is stored; forming, thereafter, a carcass by attaching a continuous cord while radially displacing it back and forth between the both bead portions at a given circumferential pitch P; and then folding ends of the carcass around the beads by removing the folding core and expanding the bladder stored therein.
